# EUROPEAN PATENT SPECIFICATION

(11) **EP 1 909 192 B1**
(45) Date of publication and mention of the grant of the patent: **03.03.2010**
(21) Application number: 06121681.8
(22) Date of filing: 03.10.2006
(51) Int. Cl.: G06F 17/24, G06F 3/048

(54) **System and method for freezing columns and rows in a UI table**
System und Verfahren zum Blockieren von Spalten und Zeilen in einer UI-Tabelle
Système et procédé pour figer des colonnes et des lignes dans un tableau d'interface utilisateur

(43) Date of publication of application: 09.04.2008
(73) Proprietor: Research In Motion Limited, Waterloo, Ontario N2L 3W8 (CA)
(72) Inventor: Buczek, Tomasz, Oakville, Ontario L6M 5C3 (CA)
(74) Representative: Patel, Binesh

(56) References cited:
- O'REILLYPUB: "Chapter 6. Viewing and Printing Worksheets" EXCEL: THE MISSING MANUAL, O'REILLY,, US, December 2004 (2004-12), pages 1-7, XP007901558
- "MOVING SPLIT BAR IN A CUSTOMIZED DETAILS VIEW" IBM TECHNICAL DISCLOSURE BULLETIN, IBM CORP. NEW YORK, US, vol. 34, no. 7A, 1 December 1991 (1991-12-01), pages 426-428, XP000255654 ISSN: 0018-8689
- ACTIVE WIDGETS FORUM: "Grid size problem" INTERNET CITATION, [Online] 25 January 2006 (2006-01-25), XP007901546 Retrieved from the Internet: URL:http://www.activewidgets.com/javascrip t.forum.10932.8/grid-size-problem.html> [retrieved on 2007-01-15]

## Description

The present application relates generally to displaying information in tabular form in a user interface (UI) of a computing device, for example, a wireless handheld device.

Devices such as personal computers, handheld devices including wireless mobile devices (cellular phones, PDAs, etc.) among others, typically have a display device (i.e. a display screen) for presenting information content to users. Content may be part of a Ul for an application or the operating system for the device, for example, and may include information displayed in a tabular form. Spreadsheets are one example of tabular information where information is displayed in rows and columns of a table.

The size of the screen (i.e. the overall screen dimensions at a particular resolution) often limits the amount of information that may be viewed at any one time. That is, additional rows and/or columns cannot be viewed without scrolling to bring the additional information into view on the screen. Often, it is difficult for a user to relate information in columns to the right with information in columns to the left (or vice versa) when the table to be displayed is larger than the screen since these columns may not be viewed at once. Scrolling back and forth may be confusing and provide an unsatisfactory comparison. A similar result occurs when there are too many rows to be displayed at once.

Some Uls for displaying tables of information provide options to a user to selectively "hide" or "unhide" particular columns (or rows) to turn on or off the display of such information. However, turning off the display of some of the columns (rows) in the table may not be sufficient to ensure that the information of interest is always displayed on the screen when scrolling among the columns and rows.

Other user options allow the freezing of a user sizable upper pane and/or leftmost pane. In this way, column or row labels may remain visible during scrolling. A user may select an upper pane of the first one or few adjacent rows of the table or a leftmost pane of the first one or a few adjacent columns to freeze. Respectively, a top horizontal pane is frozen to show column headings or a left vertical pane is frozen to show row headings while scrolling. In some interfaces an upper and left pane may be both frozen to show both column and row headings. Freezing ensures that at least a portion of the applicable rows and/or columns are displayed while scrolling and scrolling to show other rows or columns will not displace the frozen panes. However, information of interest in columns (rows) of interest that are not adjacent but are separated by intervening columns (rows) may not be frozen to appear simultaneously on the screen while scrolling.

As well, UI tables may appear in other documents for selectively displaying in the UI such as when scrolling through the document. When scrolling to or within such tables, it is desirable to be able to view table heading information to assist with an understanding of the tabular information.
A user interface that allows a user to split a table into multiple panes is disclosed in the IBM Technical Disclosure Bulletin of December 1991, reference XP007901546 ISSN: 0018-8689. Here split bars are defined between particular columns in a customised view of the table. The purpose of the split bar is to split the list vertically, allowing simultaneous scrolling of the information vertically and independent scrolling of the information horizontally. However portions of the table are not frozen.

A solution that addresses one or more of these issues is therefore desired.

### GENERAL

Displaying tabular information in a user interface (UI) on a display screen may be enhanced by freezing selected non-adjacent columns (rows). Freezing may ensure the display of the selected non-adjacent columns (rows) when scrolling to bring other columns (rows) into the table for display. Border rows (columns) may also be frozen when scrolling. A table in a document navigable by moving a focus to scroll the document may be displayed by a UI control configured to automatically display the frozen border rows (columns). When scrolling a focus in the document at an edge of the display screen to bring the UI control into the display, the UI control aligns a portion of the table with the edge and paints the frozen border row (column). The UI control may maintain the display of the border row (column) when scrolling through the table.

In accordance with one aspect, there may be provided a method of displaying tabular information in a user interface on a display screen comprising: freezing the display of a first column or a first row of a table displayed in a window in the user interface; scrolling the table to bring at least one other column or at least one other row into the window for display; freezing the display of a second column from said at least one other column or a second row from said at least one other row; and scrolling between the two frozen columns or the two frozen rows in the same window, whereby the respective columns or rows therebetween scroll in the table. The method may further comprise providing a user option to freeze the display of selected columns including non-adjacent columns or selected rows including non-adjacent rows; and receiving first user input selecting at least one row or column for freezing. And additionally, may further comprise receiving second user input to move the focus to scroll the display of the table; and ensuring the display of the selected at least one row or column when scrolling the display of the table.

The method step of freezing may comprise determining additional columns or rows for displaying with the columns or rows selected for freezing; and displaying the additional columns and/or rows and the columns and/or rows selected for freezing.

In one embodiment, the method may also comprise freezing a border row or border column of the table when scrolling the display of the table. For example, the table may comprise a portion of a document being displayed on the display screen and the document is navigable by moving a focus to scroll the document. As such, the display of the table may be invoked when scrolling to bring a UI control for the table onto the display screen. Thus the method may further comprise receiving first user input scrolling the UI control on to the display at an edge of the display screen, aligning a respective edge portion of the table to be scrolled onto the display with the edge of the display screen and displaying the border row or border column.

In another aspect, there may be provided a system for displaying tabular information in a user interface on a display screen, said system comprising: a display screen; a processor and memory coupled thereto; and means operable to: freeze the display of a first column or a first row of a table displayed in a window in the user interface; scroll the table to bring at least one other column or at least one other row into the window for display; freeze the display of a second column from said at least one other column or a second row from said at least one other row; and scroll between the two frozen columns or the two frozen rows in the same window, whereby the respective columns or rows therebetween scroll in the table. In yet a further aspect, there may be provided a computer program product having computer readable code embodied therein, for execution by a processor for configuring a computer to display tabular information in a user interface on a display screen. The computer program product may comprise instructions and data for configuring a processor of the computer system to implement the method aspect.

### BRIEF DESCRIPTION OF THE DRAWINGS

In order that the subject matter may be readily understood, embodiments are illustrated by way of examples in the accompanying drawings, in which:

Figures 1-5 illustrate views of a user interface for displaying information in tabular form configured for freezing selected non-adjacent columns in a table in accordance with an embodiment;

Figures 6-10 illustrate views of a user interface for displaying information in tabular form configured for freezing a header/title row in a table in accordance with an embodiment;

Figures 11A-11C are flowcharts of operations for freezing non-adjacent columns;

Figures 12A-12B are flowcharts of operations for freezing a heading row when a table user interface control is invoked;

Figure 13 is a block diagram which illustrates pertinent components of an example wireless communication network and a wireless handheld communication device that communicates within the network and that is an example of a computing device that may be adapted to present table user interface controls in accordance with the teachings herein; and

Figure 14 is a more detailed diagram of the computing device of Figure 13.

### DESCRIPTION OF PREFERRED EMBODIMENTS

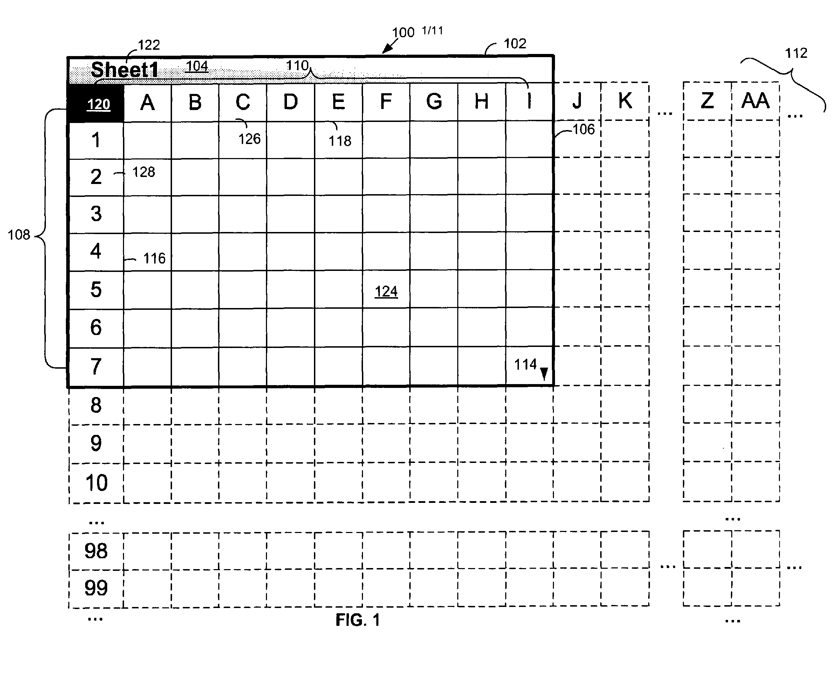

Figs. 1-5 illustrate representative views of a Ul for displaying information in tabular form, such as, but not limited to, a spreadsheet software application on a computing device. View 100 of Fig. 1 shows a display screen 102 for displaying a table 112 of information. In the representative UI, display screen 102 is divided to present an information bar 104 and a main table window 106 for displaying rows 108 and columns 110 of the table 112. In the representative view, display area or size (width and height) of display screen 102 is insufficient to show all of the columns and rows of the table 112 simultaneously. Dotted lines indicate additional portions of the table that may be displayed such as by moving a focus (e.g. 120) about the rows and columns to bring the other desired portions into the main table window 106. A scroll indicator 114 provides a visual queue that additional rows are available to be displayed, for example.

In the present embodiment, the rows and columns are referenced by numbers 116 and letters 118 respectively, as is common in many spreadsheets, to identify specific cells such as F5 (124). Optionally, the display of the references 116 and 118 may be turned off (not shown) such as by a user option.

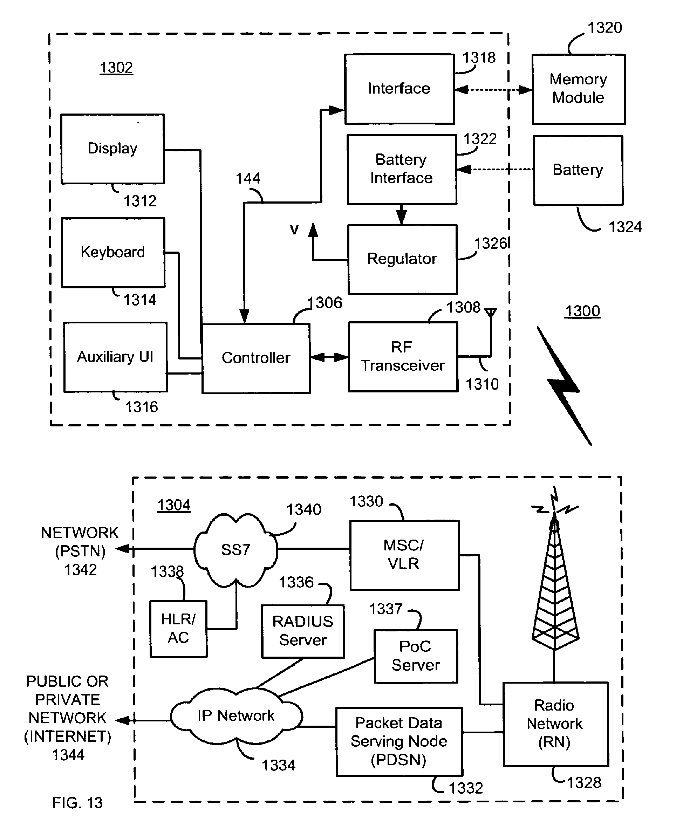

A focus 120 (like a cursor) is provided with which a user may move about the main table window 106 using an input device associated with the computing device. A representative wireless communication device that may be adapted in accordance with the embodiments discussed herein is described further below (see Figs. 13-14). The focus 120 may be moved to a specific cell to display the content of the cell in information bar 104 (display of content not shown). When focus 120 is over a specific column reference (e.g. "C" 126) or row reference (e.g. "2" 128), it may facilitate selection of the respective column or row as the active column or row for a particular action, etc. When focus 120 is not over an individual cell, (e.g. over a row or column reference) information bar 104 may display a name of all or part of the spreadsheet document being displayed (e.g. Sheet1 122).

In accordance with the embodiment shown in Figs. 1-5, focus 120 may be moved to a desired column of table 122 and a user option invoked to freeze the active column for display in window 106 even if the user scrolls to bring other columns into the window 106. The user may move focus 120 to activate and freeze a plurality of columns, including non-adjacent columns, as described further.

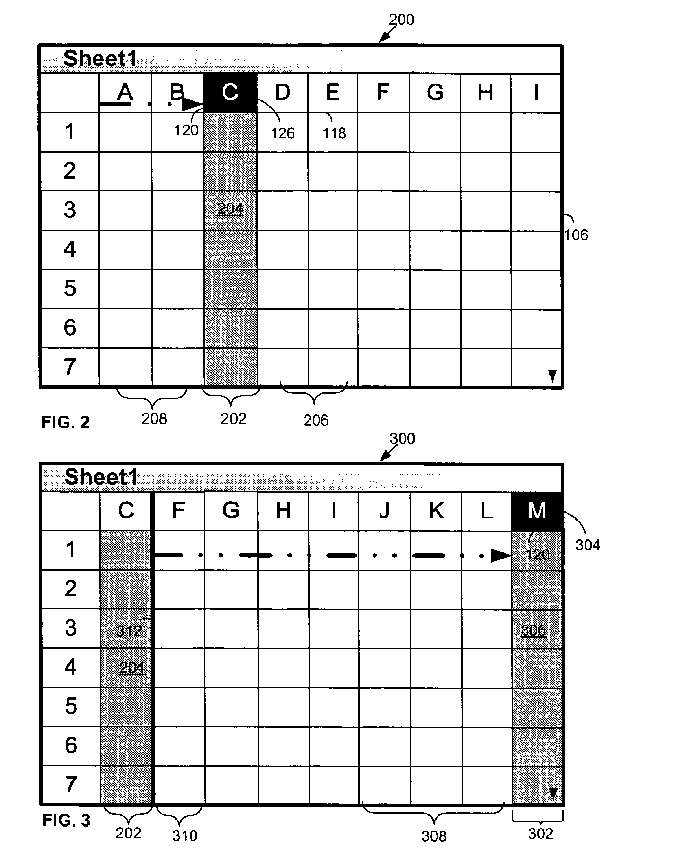

View 200 of Fig. 2 shows focus 120 moved to column C 202 at reference 126 to make this column active. For clarity, view 200 shows only displayable portions of table 122 that fit in main table window 106. As well, the direction of the focus move is indicated by a dash/dot line.

Upon invoking a user option (e.g. through a pop-up menu, etc. (not shown)) to select column C 202 for freezing, at least a portion of the column will remain displayed in window 106 even as a user scrolls horizontally to bring other columns not presently displayed into window 106. It is understood that any portions of the column in rows above or below the edges of the table may be brought into the display by scrolling up or down as applicable.

To visually denote that column C 202 is frozen, the background 204 is shaded. Other manners may be used to denote a frozen column (e.g. colour, font or size change to content displayed in the column, among others). Though not shown, a focus may also be brought to a frozen column to turn off the freezing option. Typically a binary or other flag is set (or unset) to denote a frozen (or "unfrozen") column.

View 300 of Fig. 3 shows focus 120 moved to column M 302 at reference 304 to freeze this column. Background 306 is shaded to visually indicate this status. It will be recognized that as focus 120 was moved to column M 302, columns J, K and L (collectively 308) and M 302 were brought into display on window 106. Column C 202 moved horizontally leftward toward and adjacent to row references 116 displacing columns A and B (208) but column C 202 remains displayed in the window 106. To accommodate the freezing of column C 202, columns D and E, (collectively 206, Fig. 2) were displaced such that column F 310 is adjacent to column C 202 in window 106. Similar operations will be applicable for scrolling horizontally leftward (not shown). Thus as a user scrolls horizontally between two frozen columns (e.g. C 202 and M 302) only the columns therebetween (e.g. D to L) scroll in window 106.

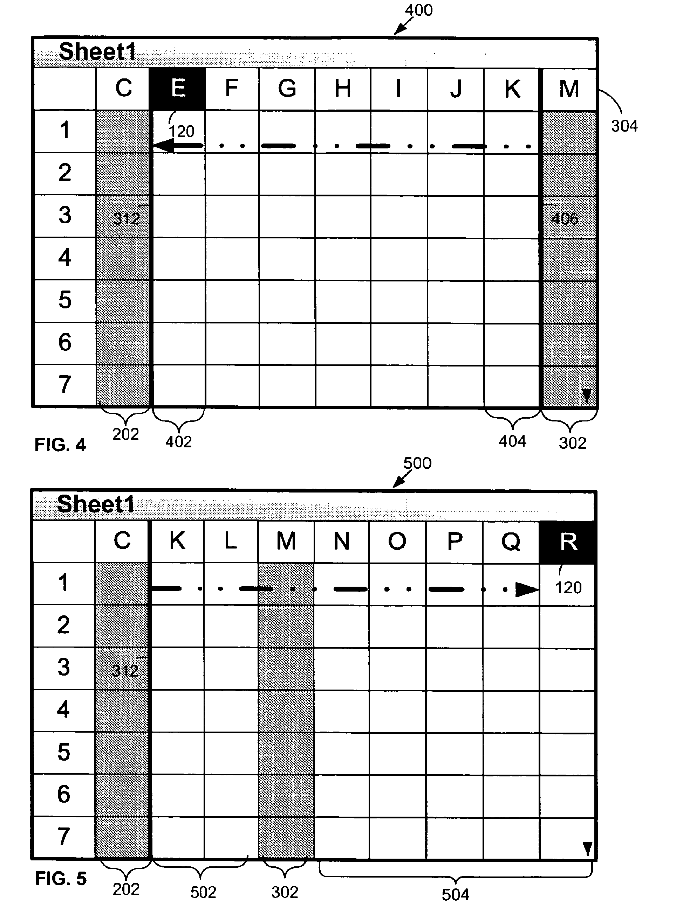

To denote when there are additional columns available for display between a frozen column and an adjacent column that is displayed, the border between the columns (typically of the frozen column) may be bolded or otherwise highlighted. In Fig. 3 right border 312 of column C 202 is bolded to indicate neighbouring columns are not displayed but may be shown if the user scrolls leftward, moving the focus 120 to the left of column F 310 (Fig. 4) to have displayed column E (as shown in Fig. 4) and D (not shown) respectively.

View 400 of Fig. 4 illustrates scrolling between the frozen columns 202 and 302. When focus 120 is moved to the column adjacent frozen column C 202 and advanced further left, the columns between the two frozen columns scroll rightward, adding a new column to the right 402 of column C and removing a column to the left 404 of column M. Left border 406 of column M is bolded to show the availability of the displaced column.

Should a user scroll outside the set of columns bounded by the two frozen columns C 202 and M 302, for example, scrolling focus 120 horizontally to the right beyond column M 302, column M 302 is moved horizontally leftward toward frozen column C 202, adding new columns 504 to the right of column M. Columns 502 between the frozen columns C and M may be displaced (typically those to the right of column C, the leftmost frozen column) to accommodate the new columns 504 inserted to the left of the rightmost frozen columns.

Though only two frozen columns are shown, operations may be adapted for additional frozen columns. Should a sufficient number of columns be frozen so that there is no unallocated space in window 106, a user may not be able to scroll to display other columns and may be required to turn off freezing on one or more columns to permit additional scrolling. It is also understood, that using the teachings herein adjacent columns may be frozen though only non-adjacent columns are shown frozen in the representative views of Figs. 1-5. Though columns of equal width are illustrated, displays of different width columns may also be accommodated. For example, should a column be too wide to fit on the display, a part of the column may be displayed.

Though the embodiment of Figs. 1-5 is illustrated with reference to columns and in particular non-adjacent columns, it will be understood that rows may be similarly frozen for continuous display when moving vertically in the table UI.

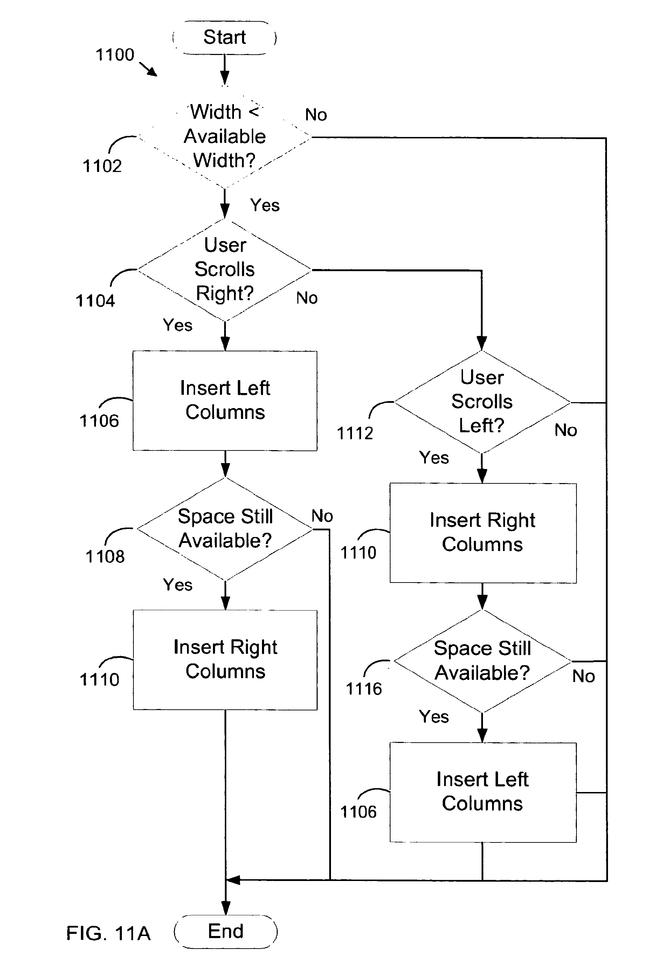

Thus a table UI control that permits a user to freeze selected columns (rows), even if such are not adjacent to one another in the table, allows a user to better relate information between the columns (rows) particularly when the columns (rows) would not otherwise be visible on the screen simultaneously. In accordance with an embodiment, Figs. 11A-11C illustrate operations of a table UI control to freeze selected columns. Intervening columns between two frozen non-adjacent columns may be scrolled to bring these columns into display as may be applicable. Amendments to these operations to accommodate freezing rows and moving vertically will be apparent to those of ordinary skill in the art. Operations may be configured as software (computer readable code including instructions and data for configuring the execution of a processor) for a UI component of a computer system to display tabular information.

In the operations 1100, certain information is referenced wherein:
- available width: width of the device screen available for displaying (sometimes called painting) the table;
- active column: current column having the focus;
- frozen columns: columns that are frozen and required to be painted on the screen regardless of which column has focus;
- width: total width of active column and frozen columns

Operations 1100 determine the columns to be painted in addition to the frozen columns and the active column when a user scrolls left or right to a column not shown on the screen. Once the columns are determined, painting may follow (not shown).

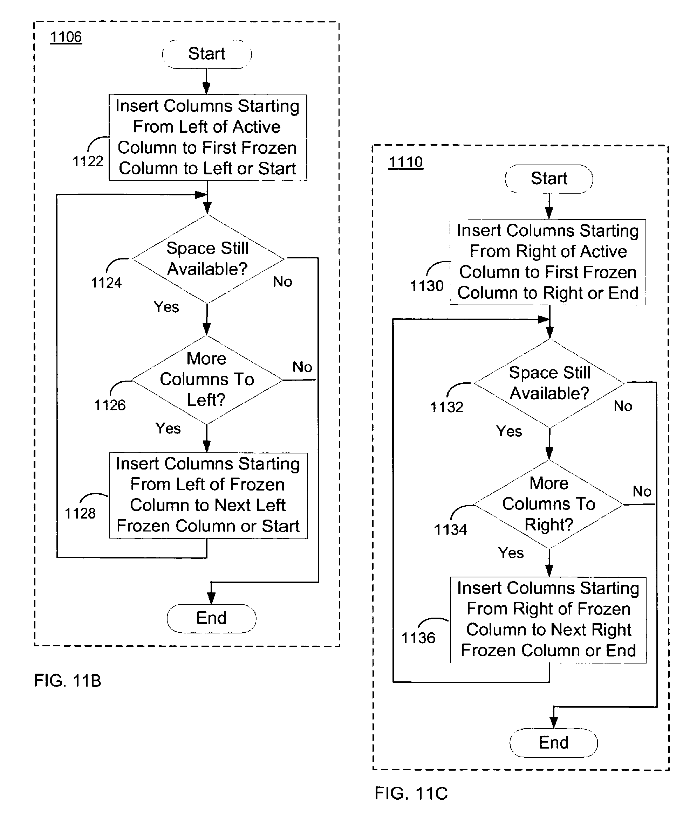

With reference to Fig. 11A, at step 1102, a determination is made whether "width < available width" such that if it is true, there is space to show other columns that are not frozen. If not true, operations 1100 end and no additional columns may be painted. At step 1104, a determination is made whether the user has scrolled to the right. If yes, then at step 1106 operations "insert left columns" (See Fig. 11 B) is performed. If more space is available (step 1108) then at step 1110 operations "insert right columns" (See Fig. 11 C) is performed.

At step 1104, a not true determination branches to step 112 where a confirmation that the user scrolled to the left is made. If so, "insert right columns" (step 1110) is performed followed by "insert left columns" (step 1106) if there is space still available (step 1116).

Operations 1106 (Fig. 11 B) to insert left columns may proceed as follows: columns are inserted to the left of the active column back toward the first frozen column to the left, if any such a frozen column exists. If there is more space available to add columns (e.g. "width plus added columns < available width") (step 1124) and if there are more columns to the left to add (step 1126), then the columns are inserted from the left toward the next left frozen column or the start of the table (step 1128). Operations may loop to step 1124 for further inserting to the left of any other frozen columns.

Operations 1110 (Fig. 11 C) to insert right columns comprising steps 1130, 1132, 1134 and 1136 proceed in a mirror fashion to operations 1106.

Some table UI controls permit hiding columns. The above operations may be adapted to insert only those columns that are not hidden.

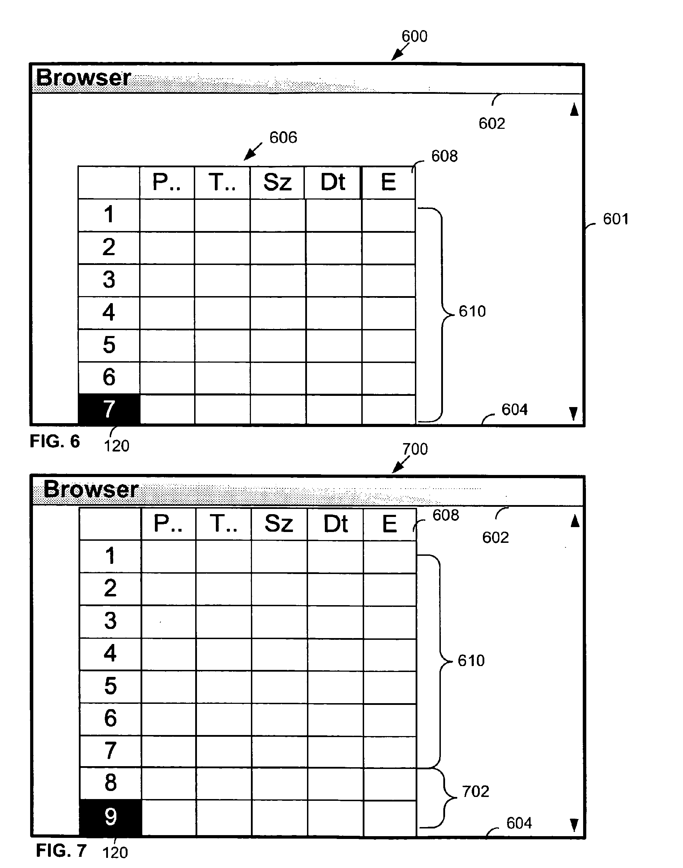

Figs. 6-10 illustrate representative views of a UI for displaying tabular information on a display screen of a computing device. In this example, the Ul freezes the title or header row for display when a user navigates (e.g. scrolls vertically) about the table.

View 600 shows a display window including a portion 601 in which content may be displayed for viewing by a user and about which a user may scroll or otherwise navigate to bring content into the display portion 601. Portion 601 is bounded by a top border 602 and a bottom border 604. Moving a focus (e.g. 120) vertically about the document scrolls the document up or down relative to the screen. Portions of the document below the bottom border 604 are brought in for display when a scrolls (navigates) downwardly at bottom border 604. Similarly portions above top border 602 are added when navigating upwardly.

In the example shown, the view 600 is generated by a Ul of a browser application to display a document such as a web page including tabular information. Other Uls will be applicable (e.g. a Ul display for a word processing document including a table).

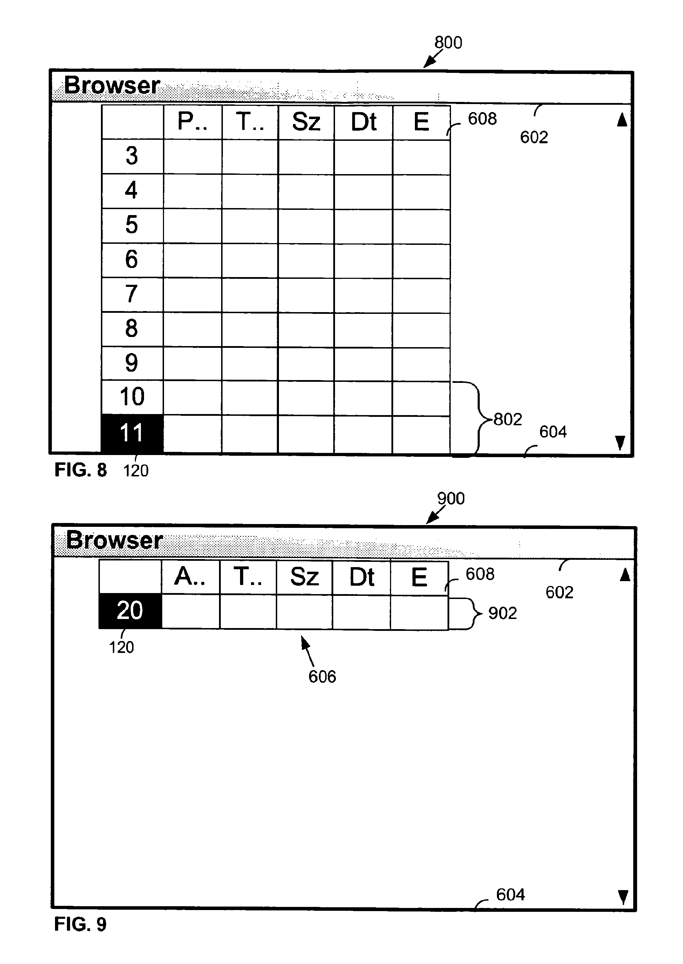

Fig. 6 shows a view 600 of a document including a table 606 having a header row 608 and plurality of rows (e.g. 610) of information. As focus 120 is moved down the rows of the table, (see view 700, Fig. 7) additional table rows 702 are added to the display and table 606 appears to scroll up the display portion 601 until the header row 608 reaches the top border 602. Header 608 is frozen so that as the focus 120 is moved further down table 606, subsequent rows 802 are displayed (see view 800, Fig. 8). Header row 608 remains displayed while topmost upper rows of the table are displaced from the display portion 601.

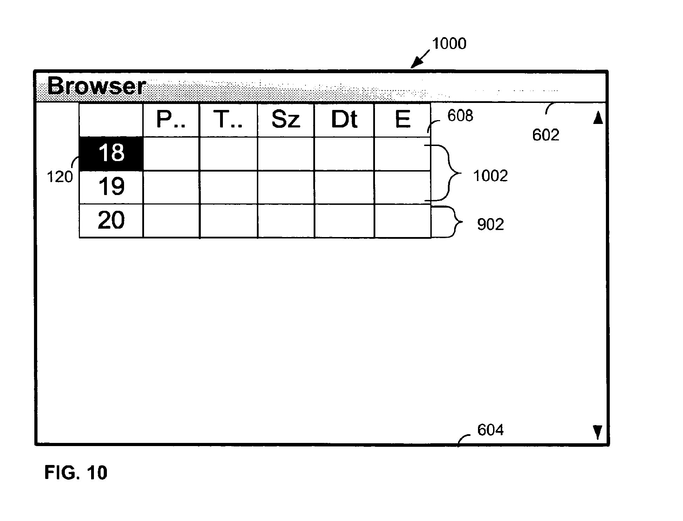

Fig. 9 illustrates navigation in the document to table 606 from below the table 606. As the bottom row 902 of the table is reached by focus 120, the bottom row 902 of table 606 is displayed with header 608 at the top in view 900. As shown in view 1000 of Fig. 10, as focus 120 is moved up table 606, rows (e.g. 1002) are inserted below frozen header 608.

Though the example of Figs. 6-10 is illustrated with reference to a header row, it will be understood that the other border row (i.e. a footer row) at the bottom of the table may be similarly frozen (alone or together with the header row) when moving vertically or left and/or rightmost border columns may be frozen when moving horizontally.

Using a table UI with a frozen border feature addresses issues of not being able to relate information in the table. Information may be related better by showing the titles/descriptions for columns as found in the header row (or other border) at all times that the table is displayed. The table UI can be used with other UI controls in focus based scrolling where a focus moves to a Ul control above or below an area of the document being displayed to scroll the screen as noted. Typically in such scrolling, the Ul maintains information about the size and relative position of the UI fields from the top of the screen. A table UI maintains information about row height (column width) and how may rows (columns) can be displayed on the screen. With this information, a table Ul can predict a vertical (horizontal) scroll position when the user moves the focus up or down (left or right). It can be predicted whether a particular row (column) is currently visible on a screen.

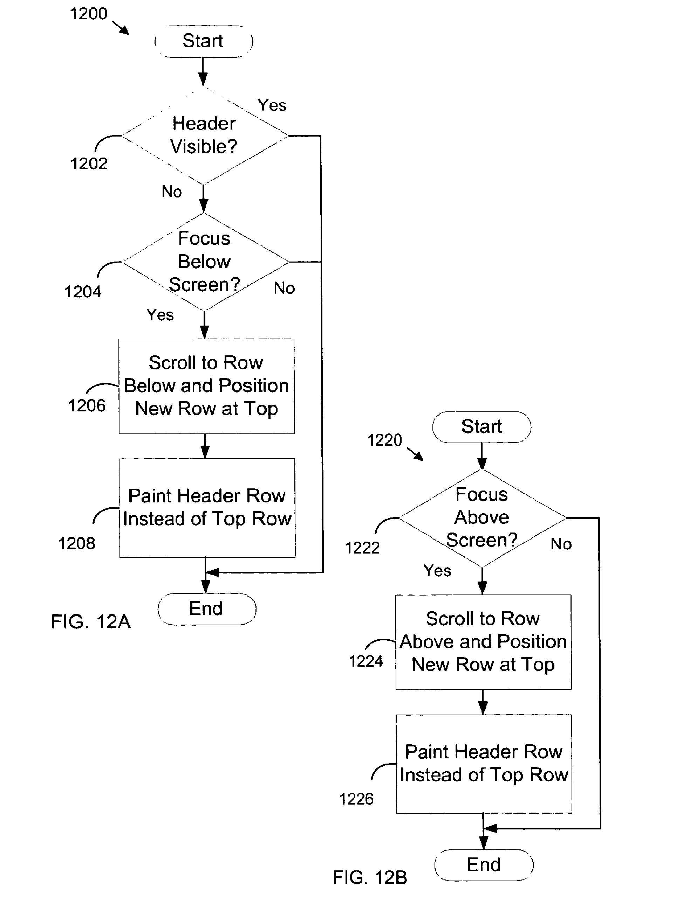

Thus, in accordance with an example, Fig. 12A illustrates operations 1200 of a table UI control to display (sometimes called "paint" in the art) the header row in the table when it would not otherwise be presented. The frozen header feature may be invoked whenever the table US gains focus when scrolling in the document.

At step 1202, a determination is made whether the header row is not visible. If it is, operations to display applicable rows continue as per routine (not shown). If it is not and, as per step 1204, the focus is moved below the screen, step 1206 operations scroll the screen down so that the row below the screen (presently not visible) moves up and the a new top row is positioned with the top edge of the screen. At step 1208, when painting table, paint header row instead of new top row.

Similar operations 1220 may be employed for a screen focus move to a row above the current screen. As shown in Fig. 12B, at step 1222 a determination is made whether the focus moves above the screen. If so operations at step 1224 scroll to the row above the screen that is not visible, appearing to move the row down the screen and a new top row is aligned with the top of the screen and the table. At step 1226, when painting the table, paint header row instead of top row.

Operations to freeze non-adjacent columns (rows) and border rows (columns) may be performed in combination, if desired, when painting a table. A representative computing device with a relatively small display screen is described further below as a candidate device for presenting tabular information as described with reference to Figs. 1-12B.

Fig. 13 is a block diagram of a communication system 1300 which includes a wireless communication device 1302 which communicates through a wireless communication network 1304. Wireless communication device 1302 preferably includes a visual display 1312, a keyboard 1314, and perhaps one or more auxiliary user interfaces (Ul) 1316, each of which is coupled to a controller 1306. Controller 1306 is also coupled to radio frequency (RF) transceiver circuitry 1308 and an antenna 1310.

Typically, controller 1306 is embodied as a central processing unit (CPU) which runs operating system software in a memory component (not shown). Controller 1306 will normally control overall operation of wireless communication device 1302, whereas signal processing operations associated with communication functions are typically performed in RF transceiver circuitry 1308. Controller 1306 interfaces with device display 1312 to display received information, stored information, user inputs, and the like. Keyboard 114, which may be a telephone type keypad or full alphanumeric keyboard, is normally provided for entering data for storage in wireless communication device 1302, information for transmission to network 1304, a telephone number to place a telephone call, commands to be executed on wireless communication device 1302, and possibly other or different user inputs.

Wireless communication device 1302 sends communication signals to and receives communication signals from network 1304 over a wireless link via antenna 1310. RF transceiver circuitry 1308 performs functions similar to those of a radio network (RN) 1328, including for example modulation/demodulation and possibly encoding/decoding and encryption/decryption. It is also contemplated that RF transceiver circuitry 1308 may perform certain functions in addition to those performed by RN 1328. It will be apparent to those skilled in art that RF transceiver circuitry 1308 will be adapted to particular wireless network or networks in which wireless communication device 1302 is intended to operate.

Wireless communication device 1302 includes a battery interface 1322 for receiving one or more rechargeable batteries 1324. Battery 1324 provides electrical power to electrical circuitry in wireless communication device 1302, and battery interface 1322 provides for a mechanical and electrical connection for battery 1324. Battery interface 1322 is coupled to a regulator 1326 which regulates power to the device. When wireless communication device 1302 is fully operational, an RF transmitter of RF transceiver circuitry 1308 is typically turned on only when it is sending to network, and is otherwise turned off to conserve resources. Similarly, an RF receiver of RF transceiver circuitry 1308 is typically periodically turned off to conserve power until it is needed to receive signals or information (if at all) during designated time periods.

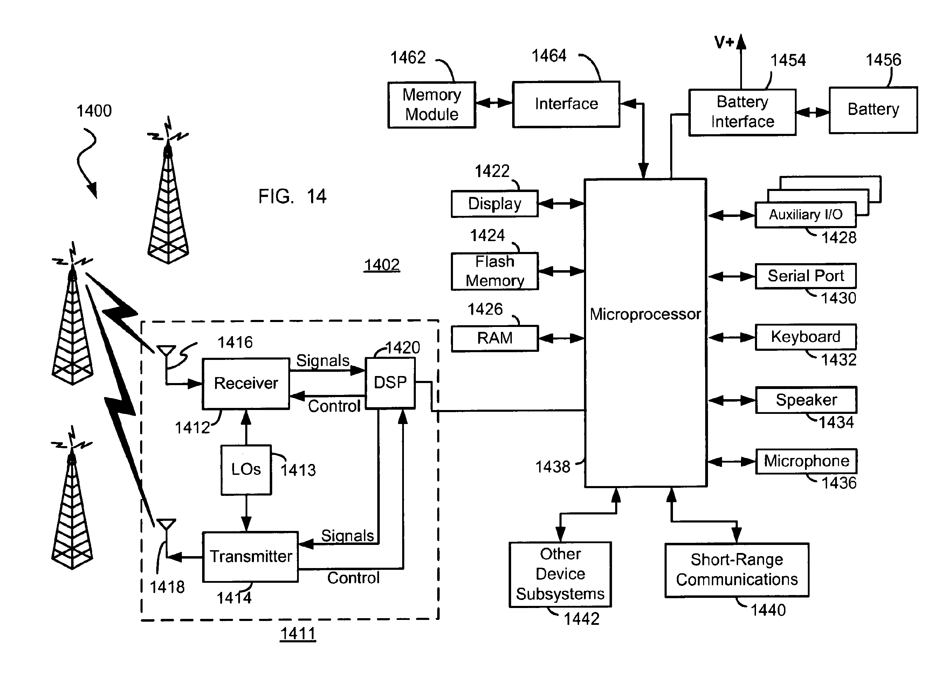

Wireless communication device 1302 operates using a memory module 1320, such as a Subscriber identity Module (SIM) or a Removable User Identity Module (R-UIM), which is connected to or inserted in wireless communication device 1302 at an interface 1318. As an alternative to a SIM or an R-UIM, wireless communication device 1302 may operate based on configuration data programmed by a service provider into an internal memory which is a non-volatile memory. Wireless communication device 1302 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, wireless communication device 1302 may be a multiple-module unit comprising a plurality of separate components, including but in no way limited to a computer or other device connected to a wireless modem. In particular, for example, in the wireless communication device block diagram of Fig. 13, RF transceiver circuitry 1308 and antenna 1310 may be implemented as a radio modem unit that may be inserted into a port on a laptop computer. In this case, the laptop computer would include display 1312, keyboard 1314, and one or more auxiliary Uls 1316, and controller 1306 may remain within the radio modem unit that communicates with the computer's CPU or be embodied as the computer's CPU. It is also contemplated that a computer or other equipment not normally capable of wireless communication may be adapted to connect to and effectively assume control of RF transceiver circuitry 1308 and antenna 1310 of a single-unit device such as one of those described above. Such a wireless communication device 1302 may have a more particular implementation as described later in relation to wireless communication device 1402 of Fig. 14.

Wireless communication device 1302 communicates in and through wireless communication network 1304. In the embodiment of Fig. 13, wireless network 1304 is a Third Generation (3G) supported network based on Code Division Multiple Access (CDMA) technologies. In particular, wireless network 1304 is a CDMA2000 network which includes fixed network components coupled as shown in Fig. 13. Wireless network 1304 of the CDMA2000-type includes a Radio Network (RN) 1328, a Mobile Switching Center (MSC) 1330, a Signaling System 7 (SS7) network 1340, a Home Location Register/Authentication Center (HLR/AC) 1338, a Packet Data Serving Node (PDSN) 1332, an IP network 1334, and a Remote Authentication Dial-In User Service (RADIUS) server 1336. SS7 network 1340 is communicatively coupled to a network 1342 (such as a Public Switched Telephone Network or PSTN), whereas IP network is communicatively coupled to a network 1344 (such as the Internet). Persons of ordinary skill in the art will appreciate that other networks and associated topologies including GPRS, E-GPRS and UMTS radio networks, among many others, may be employed with the teachings herein.

During operation, wireless communication device 1302 communicates with RN 1328 which performs functions such as call-setup, call processing, and mobility management. RN 1328 includes a plurality of base station transceiver systems that provide wireless network coverage for a particular coverage area commonly referred to as a "cell". A given base station transceiver system of RN 1328, such as the one shown in Fig. 13, transmits communication signals to and receives communication signals from wireless communication devices within its cell. The base station transceiver system normally performs such functions as modulation and possibly encoding and/or encryption of signals to be transmitted to the wireless communication device in accordance with particular, usually predetermined, communication protocols and parameters, under control of its controller. The base station transceiver system similarly demodulates and possibly decodes and decrypts, if necessary, any communication signals received from wireless communication device 1302 within its cell. Communication protocols and parameters may vary between different networks. For example, one network may employ a different modulation scheme and operate at different frequencies than other networks. The underlying services may also differ based on its particular protocol revision.

The wireless link shown in communication system 1300 of Fig. 13 represents one or more different channels, typically different radio frequency (RF) channels, and associated protocols used between wireless network 13304 and wireless communication device 1302. An RF channel is a limited resource that must be conserved, typically due to limits in overall bandwidth and a limited battery power of wireless communication device 1302. Those skilled in art will appreciate that a wireless network in actual practice may include hundreds of cells depending upon desired overall expanse of network coverage. All pertinent components may be connected by multiple switches and routers (not shown), controlled by multiple network controllers.

For all wireless communication devices 1302 registered with a network operator, permanent data (such as wireless communication device 1302 user's profile) as well as temporary data (such as wireless communication device's 1302 current location) are stored in a HLR/AC 1338. In case of a voice call to wireless communication device 1302, HLR/AC 1338 is queried to determine the current location of wireless communication device 1302. A Visitor Location Register (VLR) of MSC 1330 is responsible for a group of location areas and stores the data of those wireless communication devices that are currently in its area of responsibility. This includes parts of the permanent wireless communication device data that have been transmitted from HLR/AC 1338 to the VLR for faster access. However, the VLR of MSC 1330 may also assign and store local data, such as temporary identifications. Wireless communication device 1302 is also authenticated on system access by HLR/AC 1338. In order to provide packet data services to wireless communication device 1302 in a CDMA2000-based network, RN 128 communicates with PDSN 1332. PDSN 132 provides access to the Internet 1344 (or intranets, Wireless Application Protocol (WAP) servers, etc.) through IP network 1334. PDSN 1332 also provides foreign agent (FA) functionality in mobile IP networks as well as packet transport for virtual private networking. PDSN 1332 has a range of IP addresses and performs IP address management, session maintenance, and optional caching. RADIUS server 1336 is responsible for performing functions related to authentication, authorization, and accounting (AAA) of packet data services, and may be referred to as an AAA server.

Wireless communication network 1304 also includes a Push-to-talk over Cellular (PoC) server 1337 which may be coupled to lP network 1334. PoC server 1337 operates to facilitate PoC individual and group communication sessions between wireless communication devices within network 1304. A conventional PoC communication session involves a session connection between end users of wireless communication devices, referred to as session "participants", who communicate one at a time in a half-duplex manner much like conventional walkie-talkies or two-way radios.

Those skilled in art will appreciate that wireless network 1304 may be connected to other systems, possibly including other networks, not explicitly shown in Fig. 13. A network will normally be transmitting at very least some sort of paging and system information on an ongoing basis, even if there is no actual packet data exchanged. Although the network consists of many parts, these parts all work together to result in certain behaviours at the wireless link.

Fig. 14 is a detailed block diagram of a preferred wireless communication device 1402. Wireless communication device 1402 is preferably a two-way communication device having at least voice and advanced data communication capabilities, including the capability to communicate with other computer systems. Depending on the functionality provided by wireless communication device 1402, it may be referred to as a data messaging device, a two-way pager, a cellular telephone with data messaging capabilities, a wireless Internet appliance, or a data communication device (with or without telephony capabilities). Wireless communication device 1402 may communicate with any one of a plurality of base station transceiver systems 1400 within its geographic coverage area.

Wireless communication device 1402 will normally incorporate a communication subsystem 1411, which includes a receiver 1412, a transmitter 1414, and associated components, such as one or more (preferably embedded or internal) antenna elements 1416 and 1418, local oscillators (LOs) 1413, and a processing module such as a digital signal processor (DSP) 1420. Communication subsystem 1411 is analogous to RF transceiver circuitry 1308 and antenna 1310 shown in Fig. 13. As will be apparent to those skilled in field of communications, particular design of communication subsystem 1411 depends on the communication network in which wireless communication device 1402 is intended to operate.

Wireless communication device 1402 may send and receive communication signals over the network after required network registration or activation procedures have been completed. Signals received by antenna 1416 through the network are input to receiver 1412, which may perform such common receiver functions as signal amplification, frequency down conversion, filtering, channel selection, and like, and in example shown in Fig. 14, analog-to-digital (A/D) conversion. A/D conversion of a received signal allows more complex communication functions such as demodulation and decoding to be performed in DSP 1420. In a similar manner, signals to be transmitted are processed, including modulation and encoding, for example, by DSP 1420. These DSP-processed signals are input to transmitter 1414 for digital-to-analog (D/A) conversion, frequency up conversion, filtering, amplification and transmission over communication network via antenna 1418. DSP 1420 not only processes communication signals, but also provides for receiver and transmitter control. For example, the gains applied to communication signals in receiver 1412 and transmitter 1414 may be adaptively controlled through automatic gain control algorithms implemented in DSP 1420.

Network access is associated with a subscriber or user of wireless communication device 1402, and therefore wireless communication device 1402 requires a memory module 1462, such as a Subscriber identity Module or "SIM" card or a Removable User identity Module (R-UIM), to be inserted in or connected to an interface 1464 of wireless communication device 1402 in order to operate in the network. Alternatively, memory module 1462 may be a non-volatile memory which is programmed with configuration data by a service provider so that wireless communication device 1402 may operate in the network. Since wireless communication device 1402 is a mobile battery-powered device, it also includes a battery interface 1454 for receiving one or more rechargeable batteries 1456. Such a battery 1456 provides electrical power to most if not all electrical circuitry in wireless communication device 1402, and battery interface 1454 provides for a mechanical and electrical connection for it. The battery interface 1454 is coupled to a regulator (not shown in Fig. 14) which provides power V+ to all of the circuitry.

Wireless communication device 1402 includes a microprocessor 1438 (which is one implementation of controller 1306 of Fig. 13) which controls overall operation of wireless communication device 1402. This control includes network selection techniques of the present application. Communication functions, including at least data and voice communications, are performed through communication subsystem 1411. Microprocessor 1438 also interacts with additional device subsystems such as a display 1422, a flash memory 1424, a random access memory (RAM) 1426, auxiliary input/output (I/O) subsystems 1428, a serial port 1430, a keyboard 1432, a speaker 1434, a microphone 1436, a short-range communications subsystem 1440, and any other device subsystems generally designated at 1442. Some of the subsystems shown in Fig. 14 perform communication-related functions, whereas other subsystems may provide "resident" or on-device functions. Notably, some subsystems, such as keyboard 1432 and display 1422, for example, may be used for both communication-related functions, such as entering a text message for transmission over a communication network, and device-resident functions such as a calculator or task list. Operating system software used by microprocessor 1438 is preferably stored in a persistent store such as flash memory 1424, which may alternatively be a read-only memory (ROM) or similar storage element (not shown). Those skilled in the art will appreciate that the operating system, specific device applications, or parts thereof, may be temporarily loaded into a volatile store such as RAM 1426.

Microprocessor 1438, in addition to its operating system functions, preferably enables execution of software applications on wireless communication device 1402. A predetermined set of applications which control basic device operations, including at least data and voice communication applications, will normally be installed on wireless communication device 1402 during its manufacture. A preferred application that may be loaded onto wireless communication device 1402 may be a personal information manager (PIM) application having the ability to organize and manage data items relating to user such as, but not limited to, e-mail, calendar events, voice mails, appointments, and task items. Naturally, one or more memory stores are available on wireless communication device 1402 and SIM 1462 to facilitate storage of PIM data items and other information.

The PIM application preferably has the ability to send and receive data items via the wireless network. In a preferred embodiment, PIM data items are seamlessly integrated, synchronized, and updated via the wireless network, with the wireless communication device user's corresponding data items stored and/or associated with a host computer system thereby creating a mirrored host computer on wireless communication device 1402 with respect to such items. This is especially advantageous where the host computer system is the wireless communication device user's office computer system. Additional applications may also be loaded onto wireless communication device 1402 through network, an auxiliary I/O subsystem 1428, serial port 1430, short-range communications subsystem 1440, or any other suitable subsystem 242, and installed by a user in RAM 1426 or preferably a non-volatile store (not shown) for execution by microprocessor 1438. Such flexibility in application installation increases the functionality of wireless communication device 1402 and may provide enhanced on-device functions, communication-related functions, or both. For example, secure communication applications may enable electronic commerce functions and other such financial transactions to be performed using wireless communication device 1402.

In a data communication mode, a received signal such as a text message, an e-mail message, or web page download will be processed by communication subsystem 1411 and input to microprocessor 1438. Microprocessor 1438 will preferably further process the signal for output to display 1422 or alternatively to auxiliary I/O device 1428. A user of wireless communication device 1402 may also compose data items, such as e-mail messages, for example, using keyboard 1432 in conjunction with display 1422 and possibly auxiliary I/O device 1428. Keyboard 1432 is preferably a complete alphanumeric keyboard and/or telephone-type keypad. These composed items may be transmitted over a communication network through communication subsystem 1411.

For voice communications, the overall operation of wireless communication device 1402 is substantially similar, except that the received signals would be output to speaker 1434 and signals for transmission would be generated by microphone 1436. Alternative voice or audio I/O subsystems, such as a voice message recording subsystem, may also be implemented on wireless communication device 1402. Although voice or audio signal output is preferably accomplished primarily through speaker 1434, display 1422 may also be used to provide an indication of the identity of a calling party, duration of a voice call, or other voice call related information, as some examples.

Serial port 1430 in Fig. 14 is normally implemented in a personal digital assistant (PDA)-type communication device for which synchronization with a user's desktop computer is a desirable, albeit optional, component. Serial port 1430 enables a user to set preferences through an external device or software application and extends the capabilities of wireless communication device 1402 by providing for information or software downloads to wireless communication device 1402 other than through a wireless communication network. The alternate download path may, for example, be used to load an encryption key onto wireless communication device 1402 through a direct and thus reliable and trusted connection to thereby provide secure device communication.

Short-range communications subsystem 1440 of Fig. 14 is an additional optional component which provides for communication between wireless communication device 1402 and different systems or devices, which need not necessarily be similar devices. For example, subsystem 1440 may include an infrared device and associated circuits and components, or a Bluetooth™ communication module to provide for communication with similarly-enabled systems and devices. Bluetooth™ is a registered trademark of Bluetooth SIG, Inc.

Device 1402 may be adapted to incorporate table Ul controls described with reference to Figs. 1-12B. For example, a spreadsheet application for displaying spreadsheet documents may be adapted to freeze selected columns. In a further example, a document browsing application may be adapted with a table Ul control to freeze a table's header row.

## Claims

1. A method of displaying tabular information in a user interface on a display screen, said method comprising:
freezing the display of a first column or a first row of a table displayed in a window in the user interface;
scrolling the table to bring at least one other column or at least one other row into the window for display;
freezing the display of a second column from said at least one other column or a second row from said at least one other row; and
scrolling between the two frozen columns or the two frozen rows in the same window, whereby the respective columns or rows therebetween scroll in the table.

2. The method of claim 1 further comprising scrolling outside the columns or rows bounded by the two frozen columns or two frozen rows to bring at least one additional column or at least one additional row available for display into the window, such that one of the two frozen columns moves towards the other of the two frozen columns or one of the two frozen rows moves towards the other one of the two frozen rows to displace at least some of the respective columns or rows therebetween to accommodate the at least one additional column or at least one additional row..

3. The method of claim 1 further comprising:
providing a user option to freeze the display of selected columns including non-adjacent columns or selected rows including non-adjacent rows; and
receiving first user input selecting at least one row or column for freezing.

4. The method of claim 3 further comprising:
receiving second user input to move the focus to scroll the display of the table; and
ensuring the display of the selected at least one row or column when scrolling the display of the table.

5. The method of any one of claims 1 to 4 wherein the step of freezing comprises:
determining additional columns or rows for displaying with the columns or rows selected for freezing; and
displaying the additional columns or rows and the columns or rows selected for freezing.

6. The method of any one of claims 1 to 5 comprising freezing a border row or border column of the table when scrolling the display of the table.

7. The method of claim 6 wherein the table comprises a portion of a document being displayed on the display screen, which document is navigable by moving a focus to scroll the document; and wherein the display of the table is invoked when scrolling to bring a UI control for the table onto the display screen.

8. The method of claim 7 comprising, receiving first user input scrolling the UI control on to the display at an edge of the display screen, aligning a respective edge portion of the table to be scrolled onto the display with the edge of the display screen and displaying the border row or border column.

9. A system for displaying tabular information in a user interface on a display screen, said system comprising:
a display screen;
a processor and memory coupled thereto; and
means operable to:
freeze the display of a first column or a first row of a table displayed in a window in the user interface;
scroll the table to bring at least one other column or at least one other row into the window for display;
freeze the display of a second column from said at least one other column or a second row from said at least one other row; and
scroll between the two frozen columns or the two frozen rows in the same window, whereby the respective columns or rows therebetween scroll in the table.

10. The system of claim 9, the means further operable to:
scroll outside the columns or rows bounded by the two frozen columns or two frozen rows to bring at least one additional column or at least one additional row available for display into the window, such that one of the two frozen columns moves towards the other of the two frozen columns or one of the two frozen rows moves towards the other one of the two frozen rows to displace at least some of the respective columns or rows therebetween to accommodate the at least one additional column or at least one additional row.

11. The system of claim 9 further comprising:
one or more input devices for receiving user input; and means operable to:
provide a user option to freeze the display of selected columns including non-adjacent columns or selected rows including non-adjacent rows; and
receive first user input selecting at least one row or column for freezing.

12. The system of claim 11 further comprising means operable to:
receive second user input to scroll the display of the table; and
ensure the display of the selected at least one row or column when scrolling the display of the table.

13. The system of claim 12 further comprising means operable to:
determine additional columns or rows to display with the columns or rows selected for freezing; and
display the additional columns or rows and the columns or rows selected for freezing.

14. The system of any one of claims 9 to 13 further comprising means operable to freeze a border row or border column of the table when scrolling the display of the table.

15. The system of claim 14 further comprising a UI control means for displaying a table as a portion of a document being displayed on the display screen, said document navigable by moving a focus to scroll the document; and wherein the display of the table is invoked by scrolling to bring the UI control means onto the display screen.

16. The system of claim 15 further comprising means for:
receiving first user input scrolling the UI control means on to the display at an edge of the display screen, aligning a respective edge portion of the table to be scrolled onto the display with the edge of the display screen; and displaying the border row or border column.

17. A computer program product having computer readable code embodied therein, for execution by a processor for configuring a computer to display tabular information in a user interface on a display screen, said computer program product comprising instructions and data for configuring a processor of the computer system to implement the method of any one of claims 1 to 8.

## Patentansprüche

1. Verfahren zum Anzeigen einer tabellarischen Information in einer Benutzerschnittstelle auf einem Anzeigebildschirm, wobei das Verfahren aufweist:
Fixieren der Anzeige einer ersten Spalte oder einer ersten Zeile einer Tabelle, die in einem Fenster in der Benutzerschnittstelle angezeigt wird; Scrollen der Tabelle, um zumindest eine andere Spalte oder zumindest eine andere Zeile in das Fenster zur Anzeige zu bringen;
Fixieren der Anzeige einer zweiten Spalte von der zumindest einen anderen Spalte oder einer zweiten Zeile von der zumindest einen anderen Zeile; und
Scrollen zwischen den zwei fixierten Spalten oder den zwei fixierten Zeilen in demselben Fenster, wodurch die jeweiligen Spalten oder Zeilen dazwischen in der Tabelle scrollen.

2. Verfahren gemäß Anspruch 1, das weiter aufweist Scrollen außerhalb der Spalten oder Zeilen, die von den zwei fixierten Spalten oder zwei fixierten Zeilen begrenzt sind, um zumindest eine zusätzliche Spalte oder zumindest eine zusätzliche Zeile, die zur Anzeige verfügbar sind, in das Fenster zu bringen, so dass eine der zwei fixierten Spalten zu der anderen der zwei fixierten Spalten verschoben wird oder eine der zwei fixierten Zeilen zu der anderen der zwei fixierten Zeilen verschoben wird, um zumindest einige der jeweiligen Spalten oder Zeilen dazwischen zu ersetzen, um der zumindest einen zusätzlichen Spalte oder zumindest einen zusätzlichen Zeile Platz zu bieten.

3. Verfahren gemäß Anspruch 1, das weiter aufweist:
Vorsehen einer Benutzeroption, die Anzeige ausgewählter Spalten, einschließlich nicht-angrenzender Spalten, oder ausgewählter Zeilen, einschließlich nicht-angrenzender Zeilen, zu fixieren; und
Empfangen einer ersten Benutzereingabe, die zumindest eine Zeile oder Spalte zum Fixieren auswählt.

4. Verfahren gemäß Anspruch 3, das weiter aufweist:
Empfangen einer zweiten Benutzereingabe, um den Fokus zu verschieben, um die Anzeige der Tabelle zu scrollen; und
Sicherstellen der Anzeige der ausgewählten zumindest einen Zeile oder Spalte bei einem Scrollen der Anzeige der Tabelle.

5. Verfahren gemäß einem der Ansprüche 1 bis 4, wobei der Schritt des Fixierens aufweist:
Bestimmen zusätzlicher Spalten oder Zeilen zur Anzeige mit den Spalten oder Zeilen, die zur Fixierung ausgewählt sind; und
Anzeigen der zusätzlichen Spalten oder Zeilen und der Spalten oder Zeilen, die zur Fixierung ausgewählt sind.

6. Verfahren gemäß einem der Ansprüche 1 bis 5, das aufweist Fixieren einer Randzeile oder Randspalte der Tabelle bei einem Scrollen der Anzeige der Tabelle.

7. Verfahren gemäß Anspruch 6, wobei die Tabelle einen Teil eines Dokuments aufweist, das auf dem Anzeigebildschirm angezeigt wird, wobei das Dokument navigierbar ist durch Bewegen eines Fokus, um das Dokument zu scrollen; und wobei die Anzeige der Tabelle aufgerufen wird durch Scrollen, um eine UI-Steuerung für die Tabelle auf den Anzeigebildschirm zu bringen.

8. Verfahren gemäß Anspruch 7, das aufweist Empfangen einer ersten Benutzereingabe, Scrollen der UI-Steuerung auf die Anzeige an einem Rand des Anzeigebildschirms, Ausrichten eines jeweiligen Randabschnitts der Tabelle, die auf die Anzeige zu scrollen ist, mit dem Rand des Anzeigebildschirms und Anzeigen der Randzeile oder Randspalte.

9. System zum Anzeigen einer tabellarischen Information in einer Benutzerschnittstelle auf einem Anzeigebildschirm, wobei das System aufweist:
einen Anzeigebildschirm;
einen Prozessor und einen damit verbundenen Speicher; und
Mittel, die betriebsfähig sind:
die Anzeige einer ersten Spalte oder einer ersten Zeile einer Tabelle zu fixieren, die in einem Fenster in der Benutzerschnittstelle angezeigt wird; die Tabelle zu scrollen, um zumindest eine andere Spalte oder zumindest eine andere Zeile in das Fenster zur Anzeige zu bringen;
die Anzeige einer zweiten Spalte von der zumindest einen anderen Spalte oder einer zweiten Zeile von der zumindest einen anderen Zeile zu fixieren; und
zwischen den zwei fixierten Spalten oder den zwei fixierten Zeilen in demselben Fenster zu scrollen, wodurch die jeweiligen Spalten oder Zeilen dazwischen in der Tabelle scrollen.

10. System gemäß Anspruch 9, wobei die Mittel weiter betriebsfähig sind:
außerhalb der Spalten oder Zeilen zu scrollen, die von den zwei fixierten Spalten oder zwei fixierten Zeilen begrenzt sind, um zumindest eine zusätzliche Spalte oder zumindest eine zusätzliche Zeile, die zur Anzeige verfügbar sind, in das Fenster zu bringen, so dass eine der zwei fixierten Spalten zu der anderen der zwei fixierten Spalten verschoben wird oder eine der zwei fixierten Zeilen zu der anderen der zwei fixierten Zeilen verschoben wird, um zumindest einige der jeweiligen Spalten oder Zeilen dazwischen zu ersetzen, um der zumindest einen zusätzlichen Spalte oder zumindest einen zusätzlichen Zeile Platz zu bieten.

11. System gemäß Anspruch 9, das weiter aufweist:
eine oder mehrere Eingabevorrichtungen zum Empfangen einer Benutzereingabe; und Mittel, die betriebsfähig sind:
eine Benutzeroption vorzusehen, um die Anzeige ausgewählter Spalten, einschließlich nicht-angrenzender Spalten, oder ausgewählter Zeilen, einschließlich nicht-angrenzender Zeilen, zu fixieren; und
eine erste Benutzereingabe zu empfangen, die zumindest eine Zeile oder Spalte zum Fixieren auswählt.

12. System gemäß Anspruch 11, das weiter Mittel aufweist, die betriebsfähig sind:
eine zweite Benutzereingabe zu empfangen, um die Anzeige der Tabelle zu scrollen; und
die Anzeige der ausgewählten zumindest einen Zeile oder Spalte bei einem Scrollen der Anzeige der Tabelle sicherzustellen.

13. System gemäß Anspruch 12, das weiter Mittel aufweist, die betriebsfähig sind:
zusätzliche Spalten oder Zeilen zur Anzeige mit den Spalten oder Zeilen, die zur Fixierung ausgewählt sind, zu bestimmen; und
die zusätzlichen Spalten oder Zeilen und die Spalten oder Zeilen, die zur Fixierung ausgewählt sind, anzuzeigen.

14. System gemäß einem der Ansprüche 9 bis 13, das weiter Mittel aufweist, die betriebsfähig sind, eine Randzeile oder Randspalte der Tabelle bei einem Scrollen der Anzeige der Tabelle zu fixieren.

15. System gemäß Anspruch 14, das weiter aufweist ein UI-Steuerungsmittel zum Anzeigen einer Tabelle als einen Teil eines Dokuments, das auf dem Anzeigebildschirm angezeigt wird, wobei das Dokument navigierbar ist durch Bewegen eines Fokus, um das Dokument zu scrollen; und wobei die Anzeige der Tabelle aufgerufen wird durch Scrollen, um das UI-Steuerungsmittel auf den Anzeigebildschirm zu bringen.

16. System gemäß Anspruch 15, das weiter Mittel aufweist zum:
Empfangen einer ersten Benutzereingabe, Scrollen des UI-Steuerungsmittels auf die Anzeige an einem Rand des Anzeigebildschirms, Ausrichten eines jeweiligen Randabschnitts der Tabelle, die auf die Anzeige zu scrollen ist, mit dem Rand des Anzeigebildschirms; und Anzeigen der Randzeile oder Randspalte.

17. Computerprogrammprodukt mit darin enthaltenem Computer-lesbaren Code zur Ausführung durch einen Prozessor zum Konfigurieren eines Computers, um eine tabellarische Information in einer Benutzerschnittstelle auf einem Anzeigebildschirm anzuzeigen, wobei das Computerprogrammprodukt Anweisungen und Daten aufweist zum Konfigurieren eines Prozessors des Computersystems, um das Verfahren gemäß einem der Ansprüche 1 bis 8 zu implementieren.

## Revendications

1. Procédé d'affichage d'informations tabulaires dans une interface utilisateur sur un écran d'affichage, ledit procédé consistant à :
figer l'affichage d'une première colonne ou d'une première ligne d'une table affichée dans une fenêtre de l'interface utilisateur ;
faire défiler la table afin d'amener au moins une autre colonne ou au moins une autre ligne dans la fenêtre pour son affichage ;
figer l'affichage d'une deuxième colonne à partir de ladite au moins une autre colonne ou d'une deuxième ligne à partir de l'au moins une autre ligne ; et
effectuer un défilement entre les deux colonnes figées ou entre les deux lignes figées de la même fenêtre, de façon à faire défiler les colonnes ou les lignes respectives situées entre celles-ci dans la table.

2. Procédé selon la revendication 1, consistant en outre à effectuer un défilement à l'extérieur des colonnes ou des lignes délimitées par les deux colonnes figées ou par les deux lignes figées pour rendre disponible au moins une colonne supplémentaire ou au moins une ligne supplémentaire pour son affichage dans la fenêtre, de façon que l'une des deux colonnes figées se déplace vers l'autre des deux colonnes figées ou que l'une des deux lignes figées se déplace vers l'autre des deux lignes figées afin de déplacer au moins certaines des colonnes ou des lignes respectives situées entre celles-ci pour faire tenir l'au moins une colonne supplémentaire ou l'au moins une ligne supplémentaire.

3. Procédé selon la revendication 1, consistant en outre à :
proposer à un utilisateur une option permettant de figer l'affichage de colonnes sélectionnées comprenant des colonnes non adjacentes ou des lignes sélectionnées comprenant des lignes non adjacentes ; et
recevoir une première entrée de l'utilisateur pour sélectionner au moins une ligne ou une colonne pour la figer.

4. Procédé selon la revendication 3, consistant en outre à :
recevoir une deuxième entrée de l'utilisateur pour déplacer le point de focalisation afin de faire défiler l'affichage de la table ; et
faire en sorte que l'au moins une ligne ou colonne sélectionnée soit affichée lors du défilement de l'affichage de la table.

5. Procédé selon l'une quelconque des revendications 1 à 4, dans lequel l'étape de figeage consiste à :
déterminer des colonnes ou des lignes supplémentaires pour leur affichage avec les colonnes ou les lignes sélectionnées afin qu'elles soient figées ; et
afficher les colonnes ou les lignes supplémentaires et les colonnes ou les lignes sélectionnées afin qu'elles soient figées.

6. Procédé selon l'une quelconque des revendications 1 à 5, consistant à figer une ligne de bordure ou une colonne de bordure de la table lors du défilement de l'affichage de la table.

7. Procédé selon la revendication 6, dans lequel la table comprend une partie d'un document en cours d'affichage sur l'écran d'affichage, lequel document permet une navigation par déplacement d'un point de focalisation pour faire défiler le document ; et dans lequel l'affichage de la table est invoqué lors d'un défilement pour faire apparaître une commande d'interface utilisateur destinée à la table sur l'écran d'affichage.

8. Procédé selon la revendication 7, consistant à recevoir une première entrée d'un utilisateur pour faire défiler la commande d'interface utilisateur sur l'affichage à l'emplacement d'un bord de l'écran d'affichage, aligner une partie de bord respective de la table devant faire l'objet d'un défilement sur l'affichage avec le bord de l'écran d'affichage, et afficher la ligne de bordure ou la colonne de bordure.

9. Système destiné à afficher des informations tabulaires dans une interface utilisateur sur un écran d'affichage, ledit système comprenant :
un écran d'affichage ;
un processeur et une mémoire reliée à celui-ci ; et
des moyens ayant pour fonction de :
figer l'affichage d'une première colonne ou d'une première ligne d'une table affichée dans une fenêtre de l'interface utilisateur ;
faire défiler la table pour amener au moins une autre colonne ou au moins une autre ligne dans la fenêtre afin de l'afficher ;
figer l'affichage d'une deuxième colonne à partir de ladite au moins une autre colonne ou d'une deuxième ligne à partir de ladite au moins une autre ligne ; et
effectuer un défilement entre les deux colonnes figées ou entre les deux lignes figées de la même fenêtre, de façon à faire défiler les colonnes ou les lignes respectives situées entre celles-ci dans la table.

10. Système selon la revendication 9, les moyens ayant en outre pour fonction :
d'effectuer un défilement à l'extérieur des colonnes ou des lignes délimitées par les deux colonnes figées ou par les deux lignes figées pour rendre disponible au moins une colonne supplémentaire ou au moins une ligne supplémentaire pour leur affichage dans la fenêtre, de façon que l'une des deux colonnes figées se déplace vers l'autre des deux colonnes figées ou que l'une des deux lignes figées se déplace vers l'autre des deux lignes figées afin de déplacer au moins certaines des colonnes ou des lignes respectives situées entre celles-ci pour faire tenir l'au moins une colonne supplémentaire ou l'au moins une ligne supplémentaire.

11. Système selon la revendication 9, comprenant en outre :
un ou plusieurs dispositifs d'entrée destinés à recevoir une entrée de l'utilisateur ; et des moyens ayant pour fonction de :
proposer à un utilisateur une option permettant de figer l'affichage de colonnes sélectionnées comprenant des colonnes non adjacentes ou des lignes sélectionnées comprenant des lignes non adjacentes ; et
recevoir une première entrée de l'utilisateur pour sélectionner au moins une ligne ou une colonne pour la figer.

12. Système selon la revendication 11, comprenant en outre des moyens ayant pour fonction de :
recevoir une deuxième entrée de l'utilisateur pour faire défiler l'affichage de la table ; et
faire en sorte que l'au moins une ligne ou colonne sélectionnée soit affichée lors du défilement de l'affichage de la table.

13. Système selon la revendication 12, comprenant en outre des moyens ayant pour fonction de :
déterminer des colonnes ou des lignes supplémentaires pour leur affichage avec les colonnes ou les lignes sélectionnées afin qu'elles soient figées ; et
afficher les colonnes ou les lignes supplémentaires et les colonnes ou les lignes sélectionnées afin qu'elles soient figées.

14. Système selon l'une quelconque des revendications 9 à 13, comprenant en outre des moyens ayant pour fonction de figer une ligne de bordure ou une colonne de bordure de la table lors du défilement de l'affichage de la table.

15. Système selon la revendication 14, comprenant en outre un moyen de commande d'interface utilisateur destiné à afficher une table sous la forme d'une partie d'un document en cours d'affichage sur l'écran d'affichage, ledit document permettant une navigation par déplacement d'un point de focalisation pour faire défiler le document ; et dans lequel l'affichage de la table est invoqué lors d'un défilement pour faire apparaître le moyen de commande d'interface utilisateur sur l'écran d'affichage.

16. Système selon la revendication 15, comprenant en outre des moyens destinés à :
recevoir une première entrée d'un utilisateur pour faire défiler le moyen de commande d'interface utilisateur sur l'affichage à l'emplacement d'un bord de l'écran d'affichage, aligner une partie de bord respective de la table devant faire l'objet d'un défilement sur l'affichage avec le bord de l'écran d'affichage ; et afficher la ligne de bordure ou la colonne de bordure.

17. Produit à base de programme informatique ayant un code lisible par ordinateur mis en oeuvre dans celui-ci, pour son exécution par un processeur afin de configurer un ordinateur de façon qu'il affiche des informations tabulaires dans une interface utilisateur sur un écran d'affichage, ledit produit à base de programme informatique comprenant des instructions et des données permettant de configurer un processeur du système informatique afin de mettre en oeuvre le procédé selon l'une quelconque des revendications 1 à 8.
